# FASCICULE DE BREVET EUROPEEN

(11) **EP 0 731 293 B1**
(45) Date de publication et mention de la délivrance du brevet: **01.09.1999**
(21) Numéro de dépôt: 96400461.8
(22) Date de dépôt: 04.03.1996
(51) Int. Cl.: F16H 59/02, F16H 59/04, G05G 9/047, H01H 25/04

(54) **Ensemble de commande à levier, notamment pour boîte de vitesses mécanique robotisée**
Steuerhebelanordnung, insbesondere für automatisiertes mechanisches Schaltgetriebe
Shift lever arrangement especially for robotized mechanical gearbox

(30) Priorité: 06.03.1995 FR 9502579
(43) Date de publication de la demande: 11.09.1996
(73) Titulaire: SC2N, 78180 Montigny-le-Bretonneux (FR)
(72) Inventeur: Gauthier, Christian, 92200 Neuilly sur Seine (FR)
(74) Mandataire: Texier, Christian

(56) Documents cités:
- EP-A- 0 357 274
- WO-A-91/12444

## Description

La présente invention concerne le domaine des ensembles de commande à levier.

La présente invention s'applique tout particulièrement au domaine de la commande des boîtes de vitesses de véhicules automobiles.

On sait qu'il existe aujourd'hui, sur le marché, des véhicules équipés de boîtes de vitesses dites mécaniques et des boîtes de vitesses dites automatiques.

Dans le cas des boîtes de vitesses mécaniques, le rapport d'engrenage engagé est choisi de façon univoque par le conducteur, à l'aide d'un levier adapté et les commutations d'engrenage sont commandées mécaniquement et directement par le levier.

En revanche, dans le cas des boîtes de vitesses automatiques, le conducteur n'a accès, par le biais d'un levier, qu'au choix d'un mode de conduite avant (petite ou grande vitesse) ou arrière et les positions point mort ou point neutre (parfois dénommées "position garage"). Sur cette base, un module pilote automatiquement la boîte de vitesses tant dans un sens d'évolution des rapports que dans l'autre, c'est-à-dire tant dans le sens montée des rapports de vitesse que dans le sens de descente de ceux-ci, sans que le conducteur ne puisse alors imposer un choix précis de rapport.

Les boîtes de vitesses automatiques sont assez bien admises par certains conducteurs. Toutefois, les boîtes de vitesses automatiques ne font pas l'unanimité. En particulier, le marché latin accepte assez peu celles-ci.

Depuis quelques années, certains constructeurs, dont la Demanderesse, ont proposé des véhicules équipés de boîtes de vitesses dites mécaniques robotisées.

Ces systèmes comprennent des boîtes de vitesses mécaniques classiques munies d'actionneurs, généralement des actionneurs à fluide, aptes à agir sur la boîte de vitesses pour exécuter des changements de rapport sur la base d'ordres émis par un ensemble de commande. Cet ensemble de commande comprend un levier de commande à actionnement manuel, des transducteurs de contrôle sensibles au déplacement du levier de commande pour définir des ordres de passage des rapports de la boîte de vitesses et un module électronique qui reçoit les ordres de passages précités générés par les transducteurs de contrôle. Le module électronique pilote les actionneurs associés à la boîte de vitesses. En outre, généralement le module électronique est relié à un capteur de vitesse du véhicule de sorte que le module électronique contrôle l'exécution par les actionneurs des ordres de passage émis par l'ensemble de commande en fonction de la vitesse du véhicule. Pour cela, le module électronique n'applique les ordres issus de l'ensemble de commande, sur les actionneurs, qu'à la condition que ces ordres soient compatibles avec la vitesse réelle du véhicule détectée par le capteur.

De tels systèmes de boîte de vitesses mécaniques robotisées offrent de nombreux avantages par rapport aux dispositions antérieures connues :
- ils permettent d'améliorer le confort de conduite,
- ils permettent de supprimer la pédale d'embrayage, comme dans le cas d'une boîte de vitesses automatique,
- ils autorisent un prix intermédiaire entre une boite de vitesses mécanique et une boîte de vitesses automatique,
- ils maintiennent entièrement le plaisir de conduite,
- ils permettent d'améliorer les performances de consommation, de puissance, de fatigue du moteur, par rapport à une boîte de vitesses mécanique,
- ils permettent d'améliorer la sécurité de conduite par rapport à une boîte de vitesses mécanique, et
- ils sont compatibles avec les boîtes de vitesses mécaniques classiques.

Cependant, malgré tous ces avantages, les systèmes de boîte de vitesses mécaniques robotisées n'ont pas connu jusqu'ici le développement escompté.

Le document WO-A-91 12444 décrit un ensemble de commande à levier pour boîte de vitesses comprenant un levier monté à pivotement sur un boîtier selon deux axes orthogonaux, un premier tiroir monté à translation dans le boîtier selon une première direction, ce tiroir comportant une fenêtre recevant un tronçon du levier avec liberté de déplacement relatif entre le premier tiroir et le levier dans une seconde direction orthogonale à la première direction, un second tiroir monté à translation dans le boîtier selon la seconde direction, ce second tiroir comportant une fenêtre recevant l'extrémité du levier avec liberté de déplacement relatif entre le second tiroir et le levier dans la première direction.

La présente invention a maintenant pour but de perfectionner les ensembles de commande à levier.

Ce but est atteint selon la présente invention grâce à un ensemble de commande à levier, du type défini en revendication 1 annexée qu'est délimitée sous forme d'un préambule et d'une partie caractérisante par rapport au document WO-A-91 12444.

Selon une autre caractéristique avantageuse de la présente invention, l'extrémité précitée du levier engagée dans la lumière oblongue du tiroir de commande, comprend deux faces cylindriques opposées et deux faces sphériques également opposées entre elles et intercalées entre les faces cylindriques précitées.

Selon une autre caractéristique avantageuse de la présente invention, l'ensemble de commande comprend un coulisseau en prise avec le levier pour être déplacé lors de l'actionnement du levier, des moyens de guidage du levier et une palette en prise avec le levier et montée à pivotement par rapport au coulisseau de sorte qu'un doigt lié à la palette soit placé respectivement de part et d'autre d'une butée liée au boîtier, lorsque le levier est déplacé dans un plan, pour imposer un trajet en U du coulisseau et du levier et interdire un déplacement selon un trajet en forme de rectangle fermé pour ce dernier.

Selon une autre caractéristique avantageuse de la présente invention, le levier est guidé à déplacement selon deux plans orthogonaux entre eux, la palette est déplacée entre deux positions dites zéro ou repos et neutre lors du pivotement du levier dans un plan, et est déplacée à partir de ces positions de zéro ou repos et neutre dans deux positions de travail respectives lorsque le levier est déplacé dans un second plan perpendiculaire au premier, la butée prévue sur le boîtier et le doigt prévu sur la palette interdisant un passage direct d'une position de travail à l'autre, mais imposant un retour préalable par la position de zéro ou repos et la position neutre.

D'autres caractéristiques, buts et avantages de la présente invention apparaîtront à la lecture de la description détaillée qui va suivre, et en regard des dessins annexés donnés à titre d'exemples non limitatifs et sur lesquels :
- la figure 1 représente une vue schématique en perspective extérieure d'un ensemble de commande conforme à la présente invention,
- la figure 2 représente une vue extérieure d'une demi-coquille d'un boîtier conforme à la présente invention,

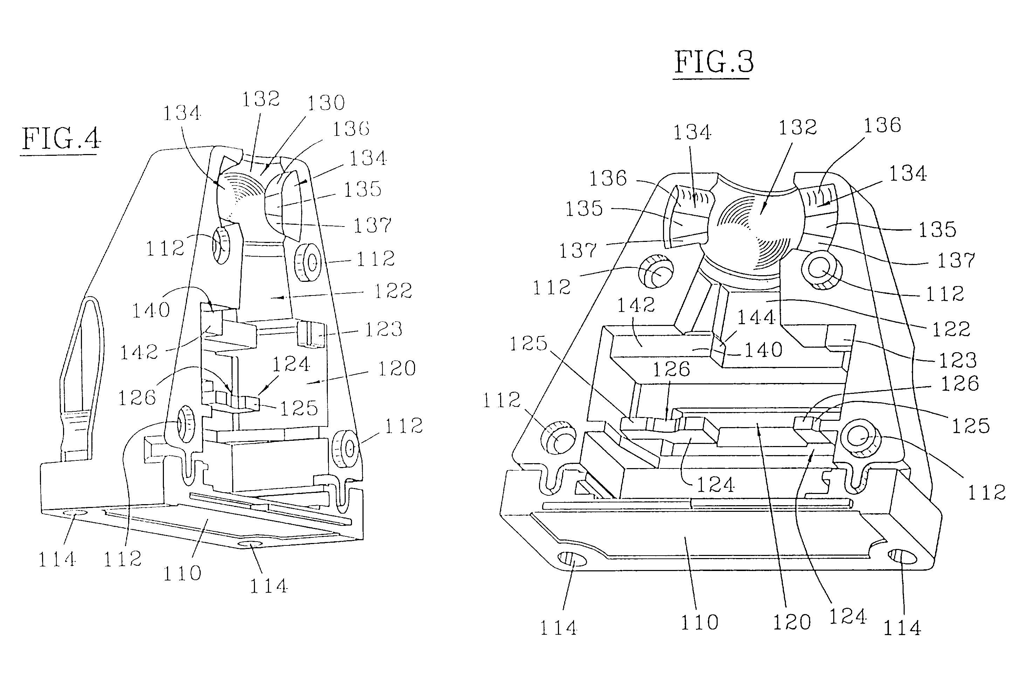

- les figures 3 et 4 représentent deux autres vues schématiques en perspective d'une demi-coquille d'un boîtier conforme à la présente invention,

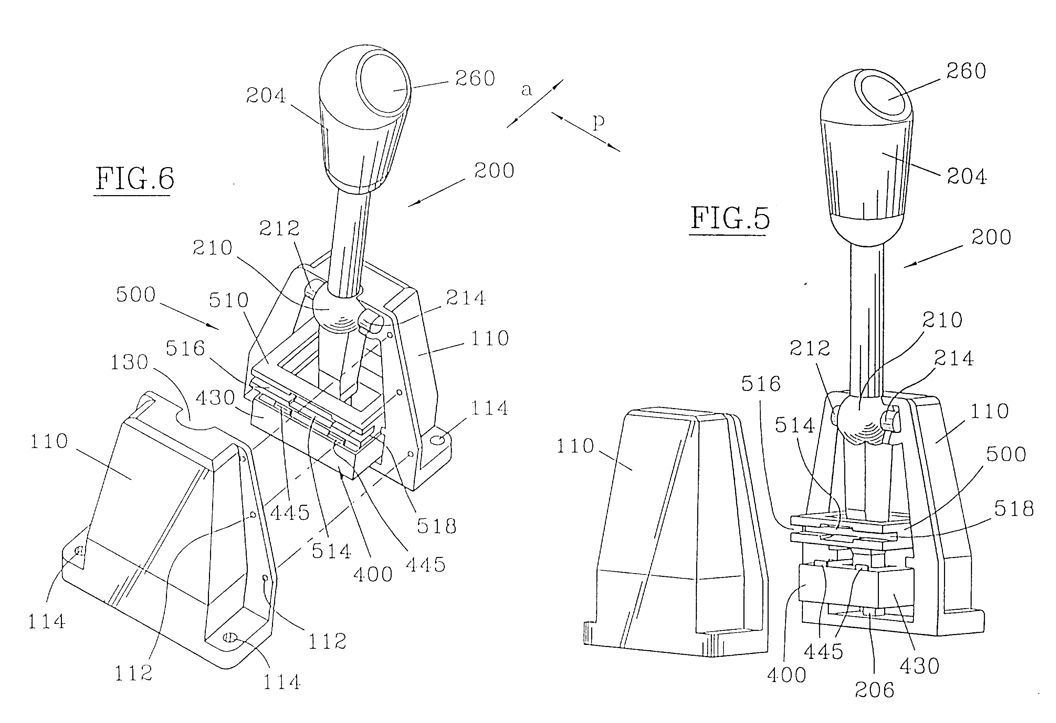

- les figures 5 et 6 représentent deux vues partiellement éclatées du même ensemble de commande,

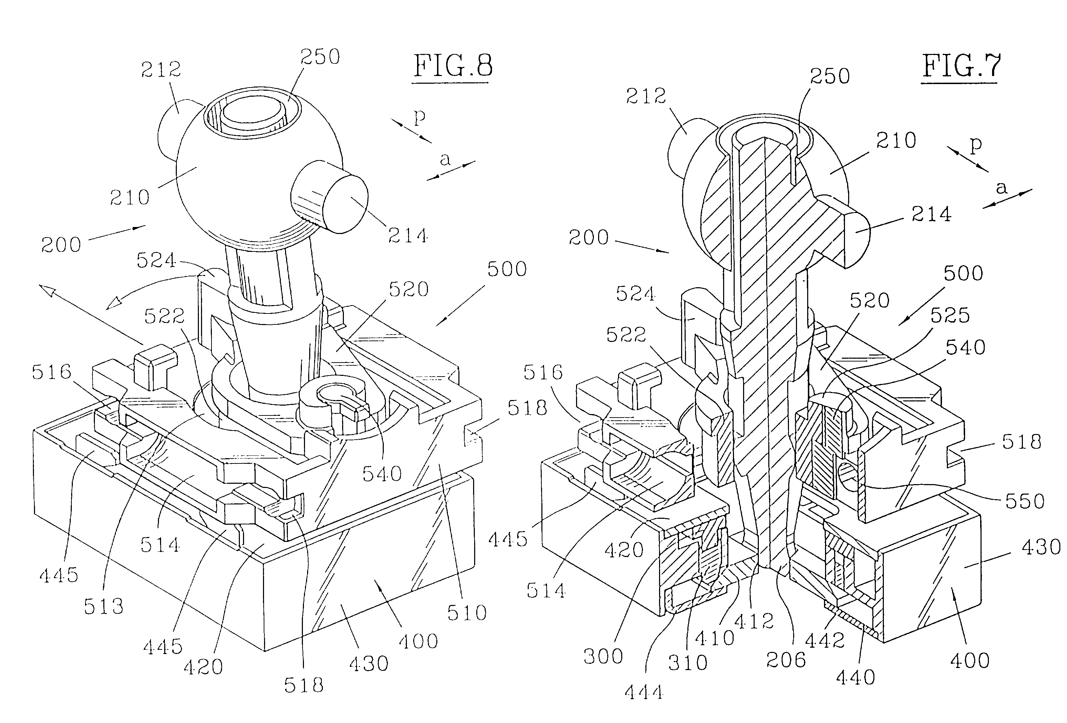

- la figure 7 représente une première vue partielle en perspective, partiellement éclatée, d'un ensemble de commande conforme à la présente invention, boîtier retiré,
- la figure 8 représente une vue similaire non éclatée de l'ensemble de commande,
- la figure 9 représente une vue en coupe axiale selon l'un des plans de pivotement du levier, du même ensemble de commande,
- les figures 10A et 10B représentent deux vues générales en perspective d'un bloc mécanique d'indexage du levier intégré à cet ensemble de commande, dans deux positions de pivotement du levier,
- les figures 11 et 12 représentent des vues de dessus du même bloc mécanique correspondant respectivement aux figures 10A et 10B, et la figure 12bis représente en vue partielle une variante de réalisation de ce bloc mécanique,

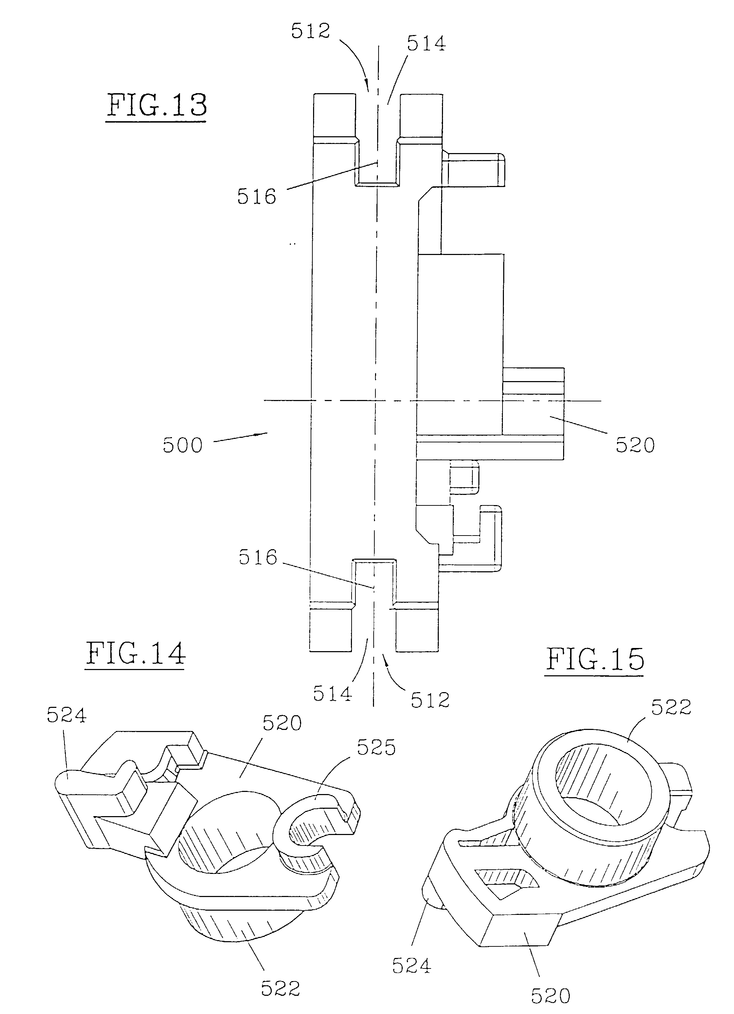

- la figure 13 représente une vue latérale de cet ensemble mécanique,
- les figures 14 et 15 représentent deux vues en perspective mutuellement opposées d'une palette intégrée à un ensemble de commande conforme à la présente invention,

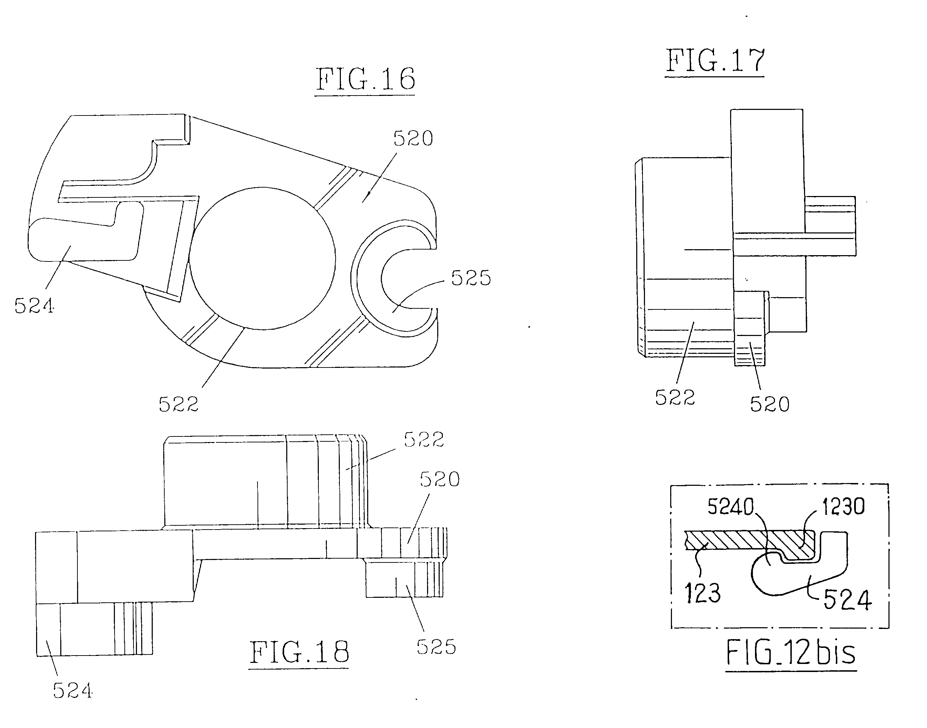

- les figures 16, 17 et 18 représentent trois vues orthogonales entre elles deux à deux de la même palette,
- la figure 19 représente une vue latérale d'un levier de commande conforme à un mode de réalisation préférentiel de l'invention,
- la figure 20 représente une vue en perspective partiellement éclatée du même levier,
- la figure 21 représente une première vue latérale du même levier, avec demi-vue en coupe axiale,
- la figure 22 représente une seconde vue latérale du levier orthogonale à la figure 21, avec demi-vue en coupe,
- la figure 23 représente une vue en bout du même levier,

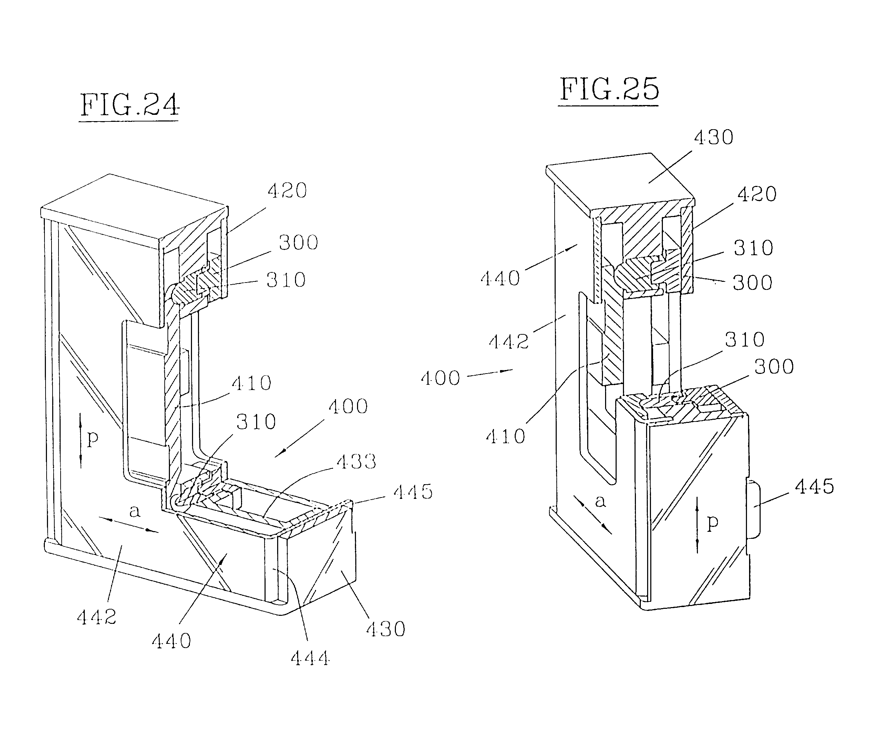

- les figures 24 et 25 représentent deux vues schématiques en perspective partiellement éclatées d'un bloc transducteur intégré dans un ensemble de commande conforme à la présente invention,
- la figure 26 représente une vue de dessus de ce bloc transducteur,
- les figures 27 et 28 représentent deux vues en coupe longitudinale du même bloc transducteur selon les plans de coupe référencés XXVII-XXVII et XXVIII-XXVIII sur la figure 26,
- la figure 29 représente une vue en coupe transversale du bloc transducteur selon le plan de coupe référencé XXIX-XXIX sur la figure 28,
- la figure 30 représente une vue de la face du même bloc transducteur dirigée vers la rotule principale du levier,
- la figure 31 représente une vue en perspective des cames prévues sur un tiroir de commande du bloc transducteur, et
- la figure 32 représente une vue des mêmes cames du tiroir de commande et illustre en outre schématiquement la position relative des différents transducteurs par rapport aux cames de ce tiroir de commande, dans diverses positions d'actionnement.

L'ensemble de commande conforme à la présente invention représenté sur les figures annexées comprend essentiellement, un boîtier 100, un levier 200 monté à pivotement sur le boîtier 100 et des transducteurs 300 montés dans le boîtier 100 pour être commandés par les déplacements du levier 200.

De préférence, le levier 200 est monté et guidé à pivotement sur le boîtier 100 pour suivre un déplacement en "h".

Par la suite, on appellera plan "principal" P de pivotement, le plan de pivotement du levier 200, par rapport au boîtier 100, dans le sens vertical du déplacement en "h" et on appellera plan "auxiliaire" A le plan de pivotement du même levier 200 dans le sens transversal du déplacement en "h".

De préférence, le déplacement dans le plan auxiliaire A, du levier 200, a pour fonction d'assurer une commutation de la boîte de vitesses entre une position zéro ou repos et une position neutre.

Par pivotement dans le plan principal P à partir de la position zéro ou repos, le levier 200 peut être déplacé, soit dans une position de travail correspondant à une commande de montée de rapports de boîte de vitesses, soit dans une position de travail opposée de commande de descente de rapports de boîte de vitesses.

De même, par pivotement dans le plan principal P, à partir de la position neutre, le levier 200 peut être déplacé dans une position de travail correspondant à une position de commande marche arrière.

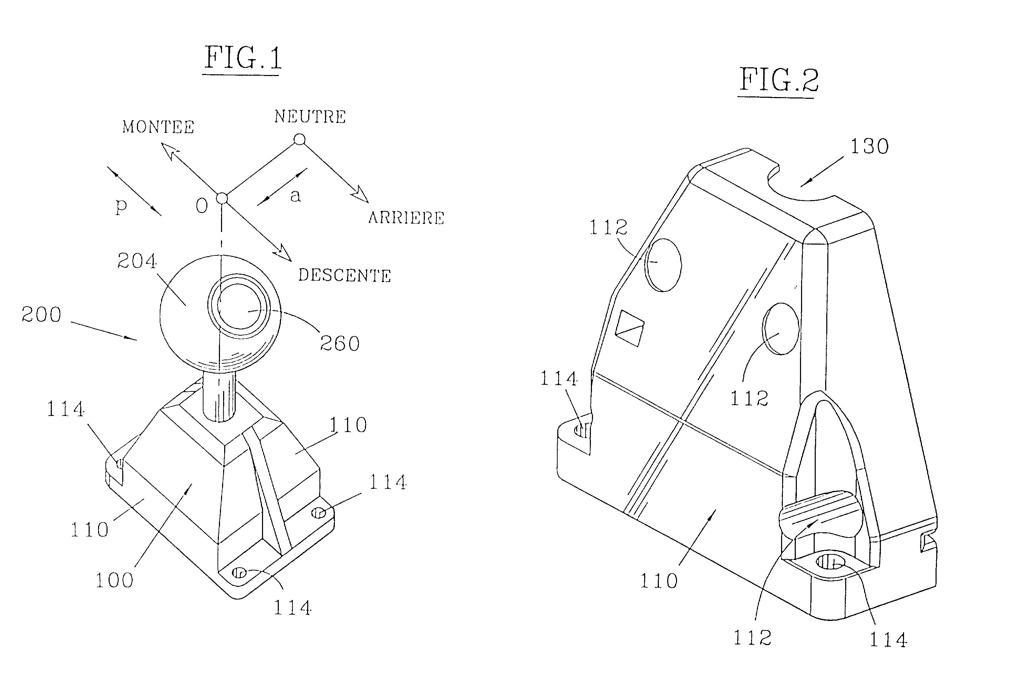

Le déplacement en "h" et les positions de zéro, neutre ainsi que les positions de travail montée, descente et arrière sont illustrées notamment sur la figure 1.

De préférence, l'angle de basculement du levier 200 sur le boîtier 100 est adaptable en fonction de chaque application.

De même la longueur et la forme du levier 200 est de préférence adaptable selon l'application particulière recherchée.

Plus précisément encore, selon le mode de réalisation préférentiel représenté sur les figures annexées, le boîtier 100 loge un bloc transducteur électrique 400 et un bloc mécanique 500.

Selon l'invention, ce bloc transducteur 400 et ce bloc mécanique 500 sont de préférence des blocs standards susceptibles d'être réutilisés dans diverses configurations d'ensemble de commande.

On va tout d'abord décrire la structure du boîtier 100 représenté sur les figures annexées.

De préférence, le boîtier 100 est composé par assemblage de deux coquilles 110 identiques.

Ces coquilles 110 sont formées de préférence par moulage en matière plastique.

Plus précisément, selon le mode de réalisation préférentiel représenté sur les figures annexées, chaque demi-coquille 110 a de préférence la forme générale d'une demi-pyramide tronquée au sommet.

Chaque demi-coquille 110 est munie de moyens 112 de fixation des deux demi-coquilles entre elles, et de moyens 114 de fixation du boîtier 100 sur un support, par exemple un plancher de véhicule, ou encore une platine sous volant.

Les coquilles 110 définissent au niveau de leur surface interne, une chambre 120 conçue pour loger le bloc transducteur 400 et le bloc mécanique 500 précités.

La chambre 120 est reliée au sommet du boîtier 100 par un canal 122 et une cavité 130 conçue pour guider le levier 200 à pivotement dans le plan principal P et le plan auxiliaire A précités.

Plus précisément, la cavité 130 est adaptée pour guider à déplacement une sphère 210 et deux tourillons 212, 214 cylindriques, coaxiaux, prévus sur le levier 200, à pivotement dans un plan parallèle au plan de joint des coquilles 110, et qui coïncide avec le plan principal précité P.

En outre, la cavité 130 est adaptée pour guider les tourillons 212, 214 à rotation autour de leur axe 215, ce qui correspond à un pivotement du levier 200 dans un plan perpendiculaire au plan de joint des coquilles 110, c'est-à-dire dans le plan auxiliaire précité A.

A cette fin, de préférence, la cavité 130 est formée d'une calotte sphérique centrale 132 complémentaire de la sphère 210, encadrée de part et d'autre de deux cavités secondaires symétriques et diamétralement opposées 134, conçues pour recevoir respectivement l'un des tourillons 212, 214.

Plus précisément encore, de préférence, chaque cavité secondaire 134 est constituée d'une paroi de fond plane 135 en forme générale de trapèze isocèle encadrée elle-même de deux parois latérales généralement hémicylindriques 136, 137 centrées sur des axes non parallèles, lesquels axes convergent en direction du centre de la calotte sphérique centrale 132 dont ils sont sécants.

On va maintenant décrire la structure du levier 200 conforme au mode de réalisation préférentiel de l'invention.

Le levier 200 est formé pour l'essentiel d'une tige généralement allongée centrée sur un axe 202.

Il comprend une extrémité proximale 204 adaptée pour une commande manuelle et une extrémité distale 206 en prise avec le bloc transducteur 400.

En un lieu intermédiaire entre ces deux extrémités 204 et 206, par exemple sensiblement à mi-longueur, le levier 200 comprend des moyens de guidage à pivotement dans deux plans orthogonaux entre eux correspondant au plan principal P et au plan auxiliaire A précités. Ces moyens de guidage à pivotement sont formés de la sphère ou rotule 210 précitée centrée sur l'axe 202 et des deux tourillons 212, 214 coaxiaux entre eux centrés sur l'axe 215 orthogonal à l'axe 202 longitudinal du levier. Les deux tourillons 212, 214 coaxiaux sont diamétralement opposés par rapport au centre de la rotule 210.

La rotule 210 possède un rayon complémentaire de celui de la calotte 132. Les tourillons 212, 214 sont engagés dans les cavités secondaires 134. Celles-ci définissent en combinaison une chambre dont la largeur considérée perpendiculairement au plan de joint des coquilles 110 est complémentaire du diamètre des tourillons 212, 214.

Ainsi, le déplacement du levier 200 correspondant à une translation des tourillons 212, 214 dans les cavités secondaires 134 conduit à un premier pivotement du levier 200 dans le plan principal P.

Par ailleurs, le déplacement du levier 200 coïncidant à une rotation des tourillons 212, 214 selon leur axe 215 conduit à un déplacement du levier 200 dans un second plan coïncidant avec le plan auxiliaire A.

L'extrémité proximale 206 du levier 200 est conçue pour guider avec précision un tiroir 410 du bloc transducteur 400, à translation selon deux axes perpendiculaires entre eux qui coïncident avec les plans de pivotement, principal P et auxiliaire A, du levier 200.

A cette fin, le tiroir 410 possède une lumière 412 généralement oblongue.

L'extrémité proximale 206 est quant à elle dissymétrique de révolution autour de l'axe 202 et généralement complémentaire du contour de cette lumière 412.

Plus précisément encore, de préférence, l'extrémité proximale 206 du levier 200 est composée de quatre facettes : deux facettes principales 220, 222 et deux facettes secondaires 224, 226. Ces facettes principales 220, 222 et secondaires 224, 226 sont symétriques deux à deux par rapport à deux plans perpendiculaires entre eux et sécants de l'axe 202.

Les deux facettes principales 220, 222 sont formées de préférence de secteurs cylindriques centrés sur un axe commun 221 parallèle au plan principal P de pivotement et perpendiculaire au plan de pivotement auxiliaire A.

Cet axe 221 des facettes principales 220, 222 est par ailleurs perpendiculaire à l'axe du levier 202 et sécant de celui-ci.

Les deux facettes secondaires 224, 226 sont formées de préférence de secteurs sphériques centrés sur un point défini par le point de séquence entre l'axe 202 du levier et l'axe 221 précité.

Le rayon des facettes secondaires sphériques 224, 226 est supérieur au rayon des facettes principales cylindriques 220, 222.

La lumière 412 formée dans le tiroir 410 du bloc transducteur 400 est quant à elle délimitée de préférence par deux faces principales planes 413, 414 parallèles entre elles et parallèles au plan principal P de pivotement, et deux faces auxiliaires 415, 416 symétriques par rapport au plan de pivotement auxiliaire A, de préférence concaves et formées de secteurs cylindriques centrées autour d'un axe parallèle à l'axe de séquence du plan principal P et du plan auxiliaire A.

Les facettes principales cylindriques 220, 222 du levier reposent contre les faces principales planes 413, 414 de la lumière 412. Les facettes secondaires sphériques 224, 226 du levier 200 reposent contre les faces auxiliaires cylindriques 415, 416 de la lumière 412.

Par roulement des facettes principales cylindriques 220, 222 sur les faces principales 413, 414 du tiroir 410, on obtient un pivotement du levier 200 dans le plan de pivotement auxiliaire A et un déplacement selon un axe "a" parallèle à ce plan auxiliaire A, du tiroir 410.

De même, par roulement des facettes secondaires sphériques 224, 226 du levier 200, sur les faces auxiliaires 415, 416 du tiroir 410, on obtient un pivotement du levier 200 dans le plan principal P et un déplacement à translation selon un axe "p" parallèle à ce plan principal P, du tiroir 410, quelle que soit la position du levier dans le plan auxiliaire A.

La coopération définie entre le levier 200 et le tiroir 410 par le jeu de facettes 220, 222, 224, 226 et les faces 413, 414, 415 et 416 précitées assure un déplacement avec précision du tiroir 410 selon deux axes orthogonaux p, a coïncidant respectivement avec le plan principal P et le plan auxiliaire A de pivotement du levier 200, tout en évitant toute rotation du tiroir 410 sur lui-même.

La présente invention permet ainsi d'éviter tout guidage mécanique du tiroir 410, par conséquent tout effort de butée ou toute nécessité de butée de fin de course.

Entre les moyens de guidage à pivotement (rotule 210 et tourillons 212, 214) et l'extrémité distale 206, le levier 200 comprend de préférence une rotule secondaire sphérique 230 adaptée pour coopérer avec le bloc mécanique 500.

En outre, entre la rotule secondaire 230 et la rotule principale 210, le levier 200 comprend de préférence, un tronçon 240 de section droite non symétrique de révolution, avantageusement carrée. Ce tronçon 240 de section carrée est conçu pour coopérer avec une grille ou équivalent solidaire du boîtier 100 adaptée pour assurer un guidage en "h".

On notera que de préférence dans le cadre de l'invention, le bloc mécanique d'indexage 500 est situé entre le bloc transducteur 400 et la rotule principale 210. Cette disposition permet de disposer d'un bras de levier maximum pour la commande du bloc transducteur 400 et par conséquent d'une course maximale pour commander les transducteurs 300 intégrés à ce bloc.

Le cas échéant le levier 200 peut être formé de deux pièces séparées assemblées entre elles. Dans ce contexte, de préférence, l'une des pièces comprend la rotule 210 munie des deux tourillons 212, 214, le tronçon carré 240, la rotule secondaire 230 et l'extrémité distale 206. L'autre pièce conçue pour être fixée sur la rotule 210 correspond à la portion du levier 200 accessible à l'extérieur du boîtier 100.

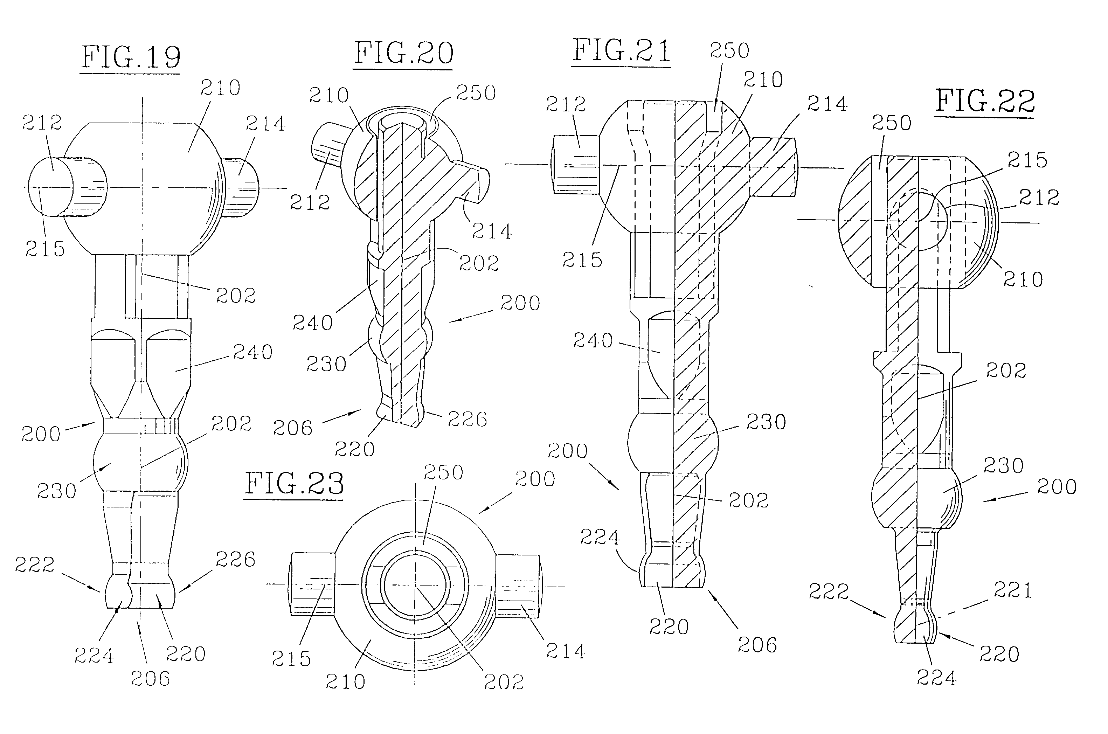

A cette fin, il est prévu de préférence, comme on le voit par exemple sur les figures 20 à 22, une chambre généralement annulaire 250 dans la rotule 210, conçue pour recevoir la pièce extérieure au boîtier 100.

En outre, le levier 200 peut être muni sur son extrémité proximale 204 d'un bouton d'interrupteur de commande 260 conçu pour piloter des fonctions annexes dans la commande de la boîte de vitesses.

On va maintenant décrire la structure du bloc transducteur 400.

Ce bloc 400 est constitué d'un bloc parallélépipédique situé à la base de la chambre 120 formé dans le boîtier 100.

Selon le mode de réalisation préférentiel conforme à la présente invention, les transducteurs pilotés par le levier 200 sont formés d'interrupteurs 300 de petite dimension à commande par poussoir axial 302.

Plus précisément encore, les poussoirs 302 des interrupteurs 300 sont sollicités par des actionneurs silicone 310.

Pour l'essentiel, le bloc transducteur 400 comprend un circuit imprimé 420 qui porte les interrupteurs 300 précités, une pièce 430 formant entretoise, une grille 440 formant boîtier externe et le tiroir ou came de commande 410 précité actionné par le levier 200.

Pour permettre une commande précise des interrupteurs 300, il faut garantir un positionnement précis des interrupteurs 300 et un empilage précis des différentes pièces composant le bloc transducteur 400.

Cette précision est obtenue grâce à l'entretoise 430 et à la coopération de la grille boîtier 440, qui assurent le câlage du circuit imprimé support 420 et de la came de commande 410.

L'entretoise 430 est formée essentiellement d'un cadre rectangulaire extérieur 432 muni d'une toile plane centrale 434 parallèle aux faces principales du bloc 400 et généralement orthogonal à la direction d'élongation du levier 200.

La toile 432 possède une lumière centrale 434 pour permettre au levier 200 d'accéder au tiroir de commande 410.

La toile 432 est pourvue autour de la lumière 434 de plusieurs cheminées traversantes 435, cylindriques, conçues pour recevoir chacune l'un des actionneurs cylindriques 310. Les cheminées 435 s'étendent perpendiculairement aux faces principales du bloc 400. Ainsi, les actionneurs 310 sont guidés dans les cheminées 435 dans une direction de translation perpendiculaire au plan moyen du circuit imprimé support 420.

De préférence, il est ainsi prévu quatre cheminées 435 équiréparties autour de la lumière 434 selon les points cardinaux pour recevoir respectivement quatre actionneurs 310 aptes à piloter des interrupteurs 300 respectifs fixés sur le circuit imprimé 420.

Chaque actionneur 310 est formé de préférence d'un fût 312 cylindrique complémentaire de la section des cheminées 435, d'une tête en forme de calotte sphérique 314 dirigée vers le tiroir de commande 410 et d'une queue concave 316 dirigée vers le circuit imprimé 420 et recevant l'un des poussoirs 302 de commande d'un interrupteur 300.

Le circuit imprimé 420 et le tiroir de commande 410 sont placés respectivement de part et d'autre de la toile 433.

L'entretoise 430 et le tiroir de commande 410 sont formés de préférence par moulage en matière plastique.

La grille 440 servant de boîtier est quant à elle réalisée de préférence à partir d'une plaque de métal. Cette grille 440 comprend une paroi plane 442 pourvue de plusieurs pattes 444 généralement perpendiculaires et engagées dans des canaux correspondant formés dans l'entretoise 430.

Le circuit imprimé 420 repose contre un décrochement périphérique 431 formé sur la surface supérieure de l'entretoise 430.

De son côté, la paroi 442 de la grille 440 repose contre un décrochement 436 périphérique formé dans la paroi inférieure de l'entretoise 430.

Le tiroir de commande 410 est ainsi pris en sandwich entre la paroi 442 et la surface inférieure de la toile 433.

Les extrémités 445 des pattes 444 qui émergent sur la surface supérieure du bloc 400 sont vrillées sur l'extérieur dudit bloc 400 pour maintenir le câlage du circuit imprimé 420.

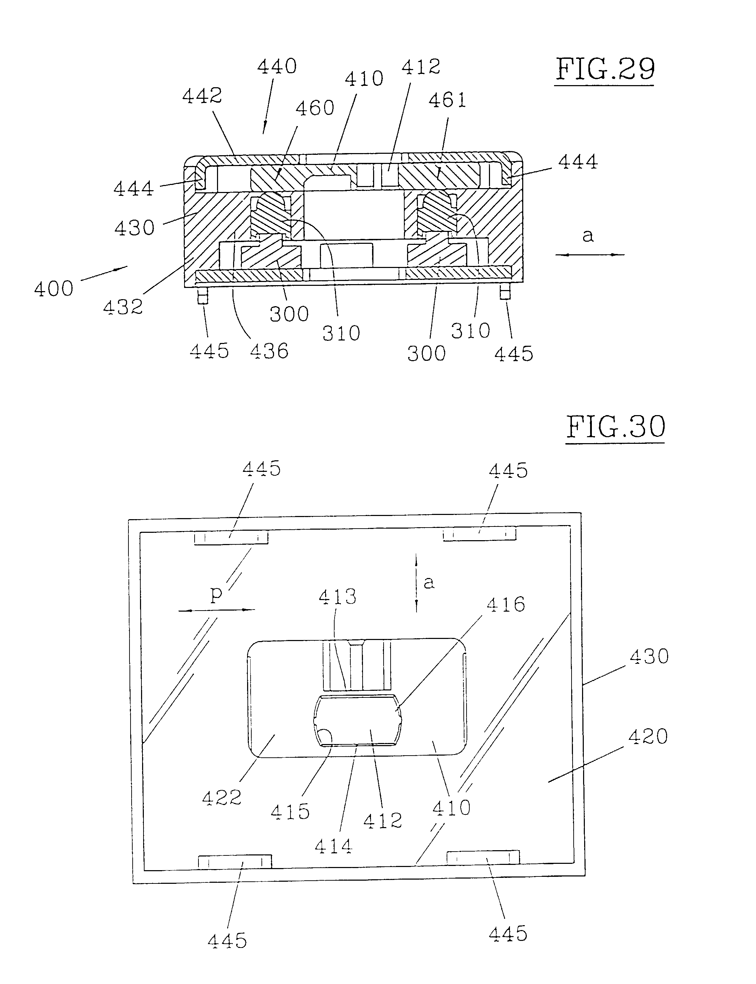

Bien entendu, le circuit imprimé 420 doit lui-même posséder une lumière traversante 422 comme on le voit sur la figure 30 pour permettre l'accès au tiroir de commande 410, par le levier 200.

Les moyens du bloc 400 qui viennent d'être décrit définissent un sous-ensemble autonome dans lequel la paroi 442 est plaquée contre la surface inférieure de l'entretoise 430, sert d'appui et de guidage au tiroir de commande 410 et plaque le circuit imprimé 420 contre la surface supérieure de l'entretoise 430.

Le tiroir de commande 410 est de préférence formé d'une plaque rectangulaire rigide pourvue de la lumière 412 précitée destinée à recevoir l'extrémité distale 206 du levier 200.

Sur sa face 417 dirigée vers le circuit imprimé 420 et les interrupteurs 300, le tiroir de commande 410 est muni de plusieurs structures de came 460, 461, 462 et 463 adaptées pour commander respectivement l'un des actionneurs 310 et par conséquent l'un des interrupteurs 300 lorsque le levier 200 et, en synchronisme, le tiroir de commande 410 sont déplacés.

De préférence, ces cames 460, 461, 462 et 463 sont adaptées de sorte qu'au moins deux interrupteurs 300 changent d'état à chaque déplacement du levier 200, et en synchronisme du tiroir de commande 410, entre l'une des cinq positions du déplacement en "h" prédéfini, à savoir les positions zéro ou repos, neutre, montée, descente, et arrière.

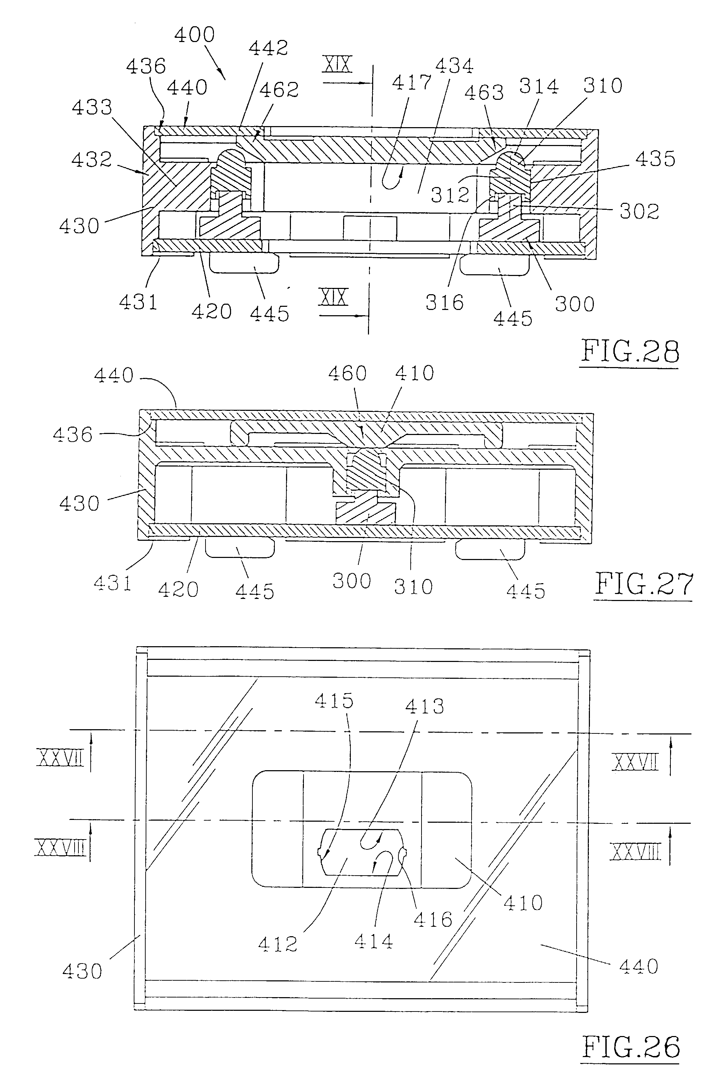

A cet effet, de préférence, l'un des interrupteurs 300, visible sur la figure 27 et sur la gauche de la figure 29 est de préférence associé à une structure de came 460 assurant un changement d'état de cet interrupteur 300 à chaque déplacement du levier 200.

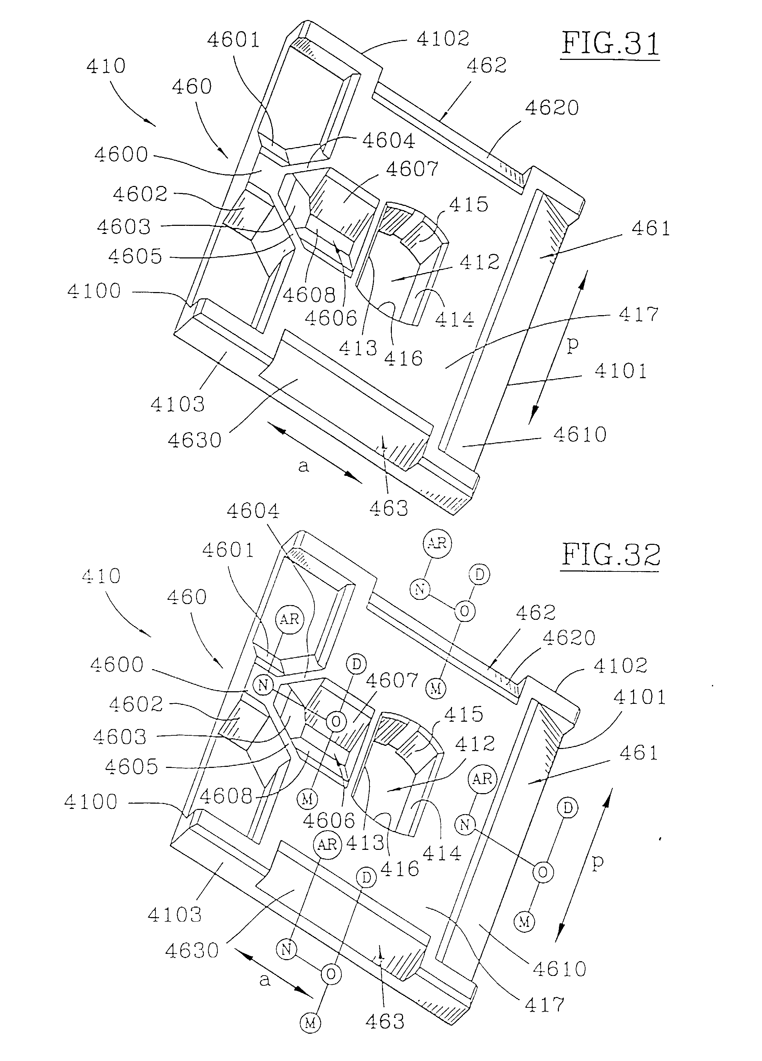

On va maintenant décrire la structure des cames 460, 461, 462 et 463 conformes au mode de réalisation préférentiel illustré sur les figures 31 et 32.

Le tiroir de commande 410 possède deux faces longitudinales de chant 4100, 4101, parallèles à la direction de translation principale p et deux faces transversales de chant 4102, 4103, parallèles à la direction de translation auxiliaire a.

Le tiroir 410 illustré sur les figures 31 et 32 est adapté pour commander quatre interrupteurs 300 situés en regard de la face de commande 417 du tiroir 410, respectivement à proximité du milieu de chaque face 4100, 4101, 4102, 4103, en position de neutre du levier 200.

Le long de la face longitudinale de chant 4100, la face 417 du tiroir 410 possède une structure de came 460 adaptée pour imposer un changement d'état de l'interrupteur 300 associé à chaque déplacement du levier 200 sur le trajet en "h". Cette structure de came 460 a la forme d'une pyramide tronquée dont le sommet 4600, plan, est coplanaire de la face 417. La pyramide 460 possède trois flancs principaux : deux flancs 4601, 4602 parallèles à la direction auxiliaire a et un flanc 4603 parallèle à la direction principale p et dirigé vers l'intérieur du tiroir 410. Le flanc 4603 est séparé des flancs 4601 et 4602 respectivement par deux nervures 4604, 4605, présentant elles-mêmes des flancs inclinés par rapport à la face 417 et dont les sommets sont coplanaires de cette face 417. Le flanc 4603 débouche dans une cavité 4606 délimitée par ailleurs par deux flancs 4607 et 4608 qui se font face, parallèles à la direction auxiliaire a.

En position de neutre du levier 200, l'actionneur associé 310 repose sur le sommet 4600 de la came 460. En position de zéro ou neutre du levier 200 cet actionneur 310 repose contre le fond de la cavité 4606. En position montée et descente du levier 200, l'actionneur 310 repose sur la surface 417, respectivement en regard des flancs 4608 et 4607. En position arrière du levier 200 l'actionneur 310 repose contre le fond du dégagement situé en regard du flanc 4601.

La came 461 prévue sur le bord opposé 4101 du tiroir 410 est formée d'une face plane 4610 inclinée par rapport à la face 417 et parallèle à la direction de translation principale p. En position zéro ou repos, montée et descente du levier 200, l'actionneur 310 associé repose contre le fond du dégagement prévu en regard de la face 4610. En revanche, en position neutre ou arrière du levier 200 cet actionneur 310 repose sur la face 417 du tiroir.

La came 462 prévue sur le bord 4102 du tiroir 410 est formée d'une face plane 4620 inclinée par rapport à la face 417 et parallèle à la direction de translation auxiliaire a. En position zéro, neutre, descente ou arrière du levier 200, l'actionneur 310 associé repose contre le fond du dégagement prévu en regard de la face 4620. En revanche, en position montée du levier 200 cet actionneur 310 repose sur la face 417.

La came 463 prévue sur le bord opposé 4103 du tiroir 410 est formée d'une face plane 4630 inclinée par rapport à la face 417 et parallèle à la direction de translation auxiliaire a. En position zéro, neutre, et montée du levier 200, l'actionneur 310 associé repose contre le fond du dégagement prévu en regard de la face 4630. En revanche, en position descente et arrière du levier 200 cet actionneur 310 repose sur la face 417 du tiroir.

L'homme de l'art comprendra que les transducteurs 300 changent d'état lorsque l'actionneur 310 correspondant est déplacé à translation d'une position d'appui sur la face 417 vers le fond du dégagement prévu en regard des facettes de came 4601, 4607, 4608, 4610, 4620 et 4630.

De préférence la surface 417 maintient les interrupteurs 300 fermés, tandis que les dégagements précités libèrent les interrupteurs 300 en position ouvert, les plans inclinés 4601, 4603, 4607, 4608, 4610, 4620 et 4630 assurant les transitions entre ces états.

Bien entendu le bloc transducteur 400 peut faire l'objet de nombreuses variantes de réalisation. Par exemple, le transducteur peut être formé non pas de micro-interrupteurs électriques 300, mais en variante d'aimants placés sur le tiroir 410 et positionnés pour commander des sondes de Hall ou équivalents supportés par le circuit imprimé 420. Selon encore une autre variante, les transducteurs 300 peuvent être formés de moyens opto-électroniques.

Selon encore une autre variante, les transducteurs peuvent être formés d'aimants et de sondes de Hall ou équivalents portés par des supports ou circuits imprimés 420 parallèles, respectivement de part et d'autre du tiroir 410 muni de fenêtres permettant d'activer une sonde à effet Hall par l'aimant associé lorsqu'une fenêtre est alignée sur une paire aimant/sonde à effet Hall, et au contraire désactiver cette sonde lorsque la paroi du tiroir 410 est intercalée entre l'aimant et la sonde associée.

On va maintenant décrire la structure du bloc mécanique 500 intégré dans l'ensemble de commande conforme à la présente invention.

Ce bloc 500 comprend principalement un coulisseau parallélépipédique 510 associé à une palette pivotante 520.

Le coulisseau 510 est guidé à translation dans la chambre 120 dans une direction parallèle au plan principal P, c'est-à-dire au plan de joints des coquilles 110 et orthogonale au plan auxiliaire A.

Le coulisseau 510 est guidé dans ce déplacement à translation par des nervures 124 formées dans la chambre 120 du boîtier.

Le coulisseau 510 est rappelé élastiquement vers une position centrale dans la chambre 120. Cette position centrale correspond aux positions de zéro ou repos et neutre du levier 200.

En outre, le coulisseau 510 est indexé dans son déplacement à translation pour définir deux positions stables de travail respectivement de part et d'autre de la position centrale précitée, lesquelles positions indexées correspondent aux positions de travail montée ou descente ou arrière du levier 200.

A cette fin, le coulisseau 510 possède de préférence deux faces latérales principales 512 parallèles au plan de pivotement principal P du levier 200, soit parallèles au plan de joint de coquilles 110.

Dans chacune de ces faces latérales 512, il est ménagé une chambre centrale 514 prolongée, selon la direction de translation du coulisseau 510, par deux rainures latérales respectives 516, 518 lesquelles débouchent respectivement sur deux faces auxiliaires 519 du coulisseau 510, parallèles au plan de pivotement auxiliaire A.

Les nervures 124 prévues sur les coquilles 110 du boîtier 100, sont engagées dans ces rainures 516, 518 et dans la chambre 514.

Plus précisément, chaque coquille 110 possède des nervures 124 engagées respectivement dans les rainures 516, 518 en position de repos du coulisseau 510. La chambre centrale 514 loge quant à elle un ressort de rappel positionné ainsi entre les deux nervures 124 d'une même coquille 110.

L'homme de l'art comprendra aisément que l'entraînement à translation du coulisseau 510 à partir de la position centrale vers l'une des deux positions de travail latérales, conduit à une sollicitation du ressort placé dans la chambre 514 par l'une des nervures 124 pour assurer ainsi un effet de rappel élastique du coulisseau 510 en position centrale.

L'indexage du coulisseau 510 dans l'une quelconque des positions de travail est obtenu grâce à un plot ou moyen équivalent (bille par exemple) engagé dans des alésages ménagés dans le coulisseau 510 et débouchant dans les rainures 516, 518, soit en regard des flancs 125, des nervures 124 précitées.

Sur les figures annexées, les billes ou plots d'indexage portés par le coulisseau 510 sont référencés 550.

L'indexage en position stable du coulisseau 510 est obtenu lorsque l'un de ces plots ou billes 550 repose contre le fond d'un cran concave 126 ménagé sur le flanc précité 125 d'une nervure 124.

Les axes des plots ou billes 550 s'étendent perpendiculairement aux faces latérales principales 512.

Sur sa face supérieure 511, le coulisseau 510 est muni d'un tourillon 540 sur lequel est articulée à pivotement la palette 520. L'axe 542 du tourillon 540 est excentré par rapport au coulisseau 510.

La palette 520 comprend quant à elle un fût cylindrique généralement central 522 qui reçoit la rotule auxiliaire 230 du levier 200.

L'axe 542 du tourillon 540 orthogonal à la face supérieure 511 du coulisseau 510 est de préférence coplanaire de l'axe central du coulisseau 510 et parallèle au plan de pivotement principal P.

Le coulisseau 510 possède par ailleurs une lumière oblongue 513 dont la grande dimension s'étend parallèlement au plan de pivotement auxiliaire A. Cette lumière oblongue 513 est conçue pour recevoir le fût 522 de la palette 520.

Ainsi, la palette 520 et coulisseau 510 sont liés à déplacement selon la direction de translation imposée par les nervures 124 du boîtier, lorsque le levier 200 est entraîné à pivotement dans le plan principal P. Ce déplacement est rappelé dans la position centrale par les ressorts logés dans les chambres 514 et sollicités par les nervures 124. En outre, les positions de travail extrêmes de ce déplacement à translation sont indexées grâce aux plots 550 coopérant avec les crans 126 ménagés dans les flancs 125 des nervures 124.

En revanche, lorsque le levier 200 est entraîné à pivotement dans le plan auxiliaire A, seule la palette 520 pivote par rapport au coulisseau 510 autour du tourillon 540. Un ressort de rappel, par exemple un ressort en épingle en prise avec la palette 520 et reposant sur le coulisseau 510, sollicite la palette 520 vers une position de repos stable qui coïncide avec la position de zéro ou de repos du levier 200.

Le coulisseau 510 possède en outre sur sa surface supérieure 511 un doigt 524 conçu pour coopérer avec une butée 123 prévue dans la chambre 120 du boîtier afin d'interdire un passage direct de la position de travail descente, vers la position de travail arrière.

Le doigt 524 est diamétralement opposé à la structure 525 d'articulation sur le tourillon 540, par rapport au fût 522.

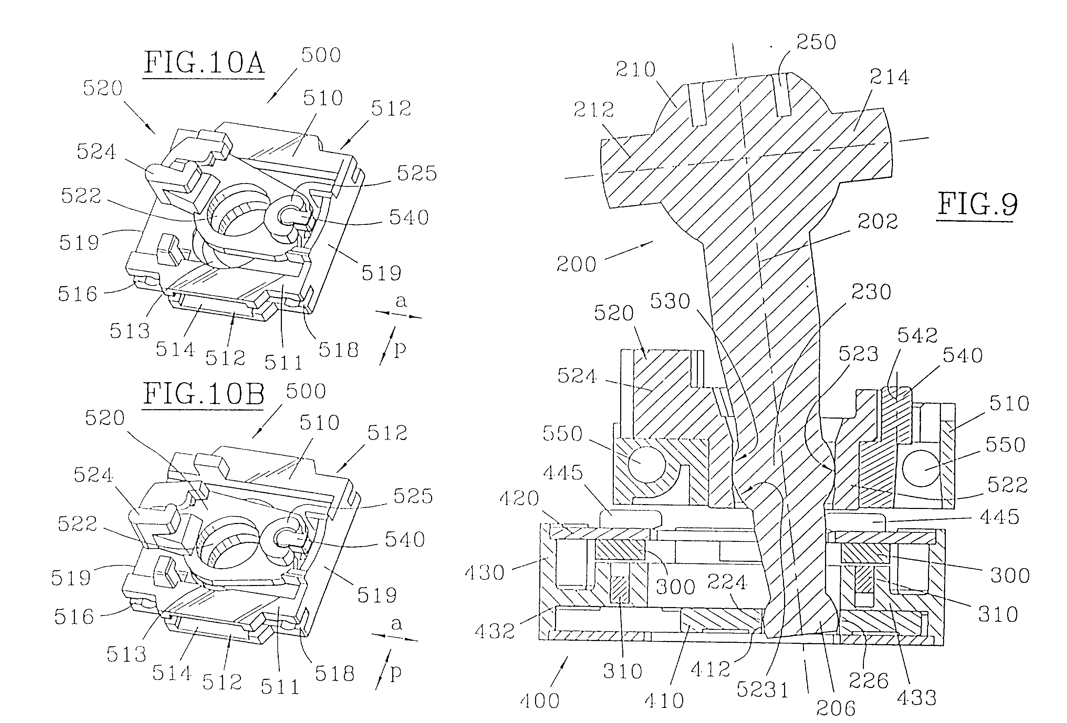

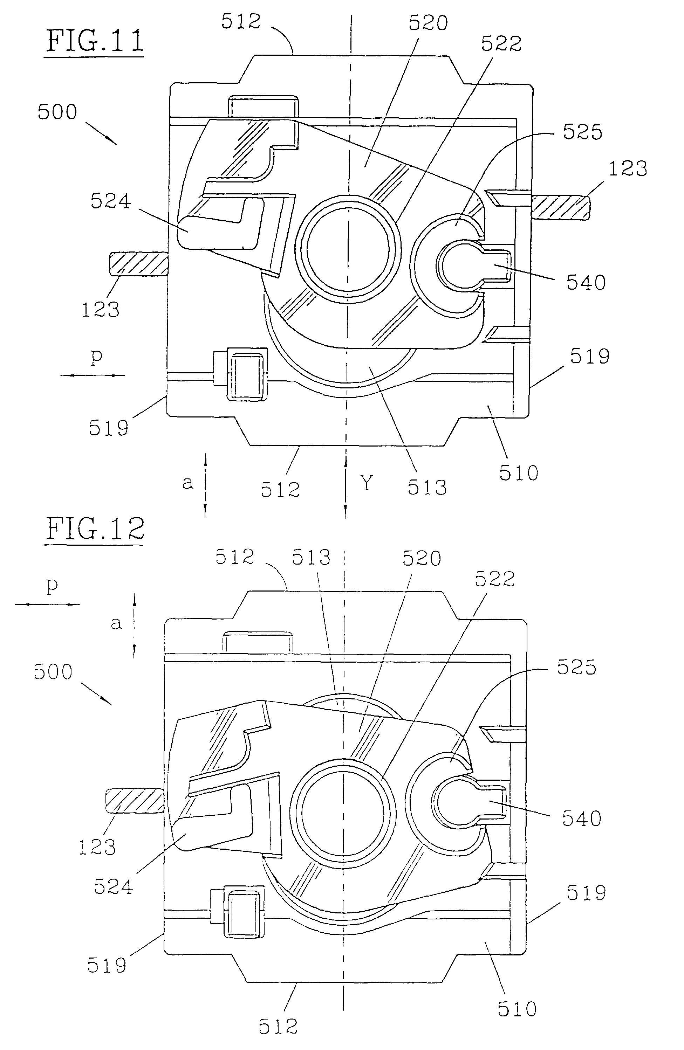

Le doigt 524 est positionné sur la palette 520 de telle sorte que lorsque le levier 200 est pivoté de la position stable de zéro (voir figure 10A et figure 11) à la position instable de neutre (voir figure 10B et figure 12), le doigt 524 lié à la palette 520 passe respectivement de part et d'autre de la butée 123 liée aux coquilles du boîtier 100.

Ainsi, lorsque le levier 200 est déplacé de la position zéro vers la position de travail descente, le doigt 524 prend position contre un flanc de la butée 123, et inversement lorsque le levier 200 est déplacé de la position neutre vers la position arrière, le doigt 524 prend position contre le flanc opposé de la butée 123. La butée 123 interdit par conséquent un passage direct de la position de descente vers la position arrière et inversement, en servant d'appui au doigt 524.

La coopération ainsi définie entre le doigt 524 et la butée 123 impose par conséquent un retour par la position de repos ou zéro et la position neutre pour passer de la position de travail descente à la position arrière ou inversement.

Selon une variante illustrée sur la figure 12bis, il est prévu des structures complémentaires 1230, 5240 sur les faces en regard de la butée 123 et du doigt 124 lorsque le dispositif est placé en position marche arrière. Ces structures 1230, 5240 permettent d'indexer l'état marche arrière en position stable. En effet, lorsque le levier 200 est placé en position marche arrière, le ressort associé à la palette 520 plaque la structure 5240 contre la butée 123 de sorte que la structure 5240 est maintenue en position stable par la saillie 1230. Pour sortir de cette position indexée, il suffit que l'utilisation actionne le levier 200 pour ramener celui-ci en position neutre. Bien entendu, pour autoriser un tel engagement et désengagement des structures 1230, 5240 celles-ci doivent être inclinés par rapport à la direction de déplacement du doigt 524.

En outre, le boîtier 100 définit une grille qui impose le déplacement en "h" pour le levier 200. Cette grille est formée de préférence d'un bloc rectangulaire 140 ménagé dans un angle de la chambre 120 en regard du tronçon 240 du levier 200.

Ce bloc 140 possède deux faces principales 142, 144 parallèles respectivement au plan de pivotement principal P et au plan de pivotement auxiliaire A du levier 200.

Ce bloc 140 qui coopère avec le tronçon carré 240 est associé avec la lumière oblongue 513 du coulisseau 510 pour définir le pivotement en "h".

Sur la figure 11, on a représenté le coulisseau 510 dans le boîtier 100 en position zéro.

Comme on le voit sur la figure 11, la largeur du tronçon carré 240 du levier 200 est complémentaire de la distance séparant les deux blocs 140 dans une projection perpendiculaire au plan de pivotement principal P. Ainsi, les deux blocs 140 autorisent une translation du coulisseau 510 dans la direction p, à partir de la position centrale stable représentée vers l'une ou l'autre des deux positions latérales montée ou descente. Cette translation selon la direction p n'est pas perturbée par l'association du doigt 124 et de la butée 123.

Le déplacement à translation dans la direction a orthogonale à la direction p précitée est interdit pour le coulisseau 510 par les nervures 124 du boîtier. En revanche, la palette 520 peut pivoter dans la lumière 513 de la position zéro à la position neutre lors du pivotement du levier 200 dans le plan auxiliaire A, comme représenté sur la figure 12.

Une fois cette position neutre atteinte, l'un des blocs 140 impose un sens unique de déplacement selon P pour le coulisseau 510 lors du pivotement du levier 200 dans le plan principal P, à savoir de la position neutre vers la position arrière.

L'homme de l'art comprendra aisément que l'amplitude de déplacement du doigt 524 est supérieure à l'amplitude du déplacement du levier 200 lors du pivotement dans le plan auxiliaire A entre la position zéro et la position neutre, grâce à l'amplification du déplacement résultant du bras de levier formé par la palette pivotante. Cette disposition permet par conséquent de placer sur le boîtier 120 une butée 123 venue de moulage présentant une largeur supérieure à celle qui pourrait être retenue, sans amplification de bras de levier résultant de l'utilisation de la palette 520, pour une même amplitude de déplacement du levier 200 entre les positions zéro et neutre.

Selon une autre caractéristique avantageuse de l'invention, le tiroir de commande 410 et le cas échéant le coulisseau 510 sont formés d'une matière plastique chargée de billes de bronze, par exemple à 60%. Ce matériau permet d'obtenir un bon coefficient de frottement.

En variante le tiroir 410 et/ou le coulisseau 510 peuvent être formés de polytétrafluoroéthylène chargés par exemple de carbone.

Comme on le voit sur la figure 9, selon une autre caractéristique avantageuse de l'invention, le canal 523 formé dans le fût 522 de la palette 520 pour recevoir la rotule auxiliaire 230, est délimité de préférence par une partie supérieure 5230, dirigée vers la rotule principale 210, cylindrique de révolution et d'un diamètre complémentaire de la sphère auxiliaire 230 et par une partie inférieure 5231 adjacente au bloc transducteur 400, convergente en direction de ce dernier, formée par exemple d'une couronne torique concave.

L'homme de l'art comprendra aisément que la coopération ainsi définie entre cette calotte 5231 et la rotule auxiliaire 230 permet d'éviter toute remontée du bloc mécanique 500 vers la rotule principale 210.

## Revendications

1. Ensemble de commande à levier, notamment pour boîte de vitesses mécanique robotisée, comprenant un boîtier (100), un levier (200) monté à pivotement sur le boîtier (100), et
un tiroir de commande (410) pourvu d'une lumière (412) généralement oblongue qui reçoit une extrémité (206) du levier (200) non symétrique de révolution, caractérisé par le fait que l'extrémité (206) du levier (200) introduite dans la lumière oblongue (412) du tiroir de commande (410) est complémentaire de cette lumière (412) de sorte que la coopération de l'extrémité (206) du levier (200) et de la lumière (412) formée dans le tiroir de commande (410) impose un déplacement du tiroir de commande (410) selon deux axes orthogonaux entre eux.

2. Ensemble selon la revendication 1, caractérisé par le fait que l'extrémité précitée (206) du levier (200) engagée dans la lumière oblongue (412) du tiroir de commande (410) comprend deux faces cylindriques opposées (220, 222) et deux faces sphériques (224, 226) également opposées entre elles et intercalées entre les faces cylindriques (220, 222).

3. Ensemble selon la revendication 2, caractérisé par le fait que les deux faces cylindriques (220, 222) et les deux faces sphériques (224, 226) sont symétriques deux à deux par rapport à des plans sécants de l'axe du levier (200).

4. Ensemble selon la revendication 3, caractérisé par le fait que les deux faces cylindriques (220, 222) sont centrées sur un axe commun (221) perpendiculaire à l'axe longitudinal (202) du levier (200) et sécant de celui-ci.

5. Ensemble selon l'une des revendications 3 ou 4, caractérisé par le fait que les surfaces sphériques (224, 226) sont centrées sur l'axe longitudinal (202) du levier (200).

6. Ensemble selon l'une des revendications 2 à 5, caractérisé par le fait que les faces sphériques (224, 226) ont un rayon supérieur à celui des faces cylindriques (220, 222).

7. Ensemble selon l'une des revendications 1 à 6, caractérisé par le fait que le tiroir de commande (410) pilote des transducteurs (300).

8. Ensemble selon l'une des revendications 1 à 7, caractérisé par le fait qu'il comprend en outre un coulisseau (510) en prise avec le levier (200) pour être déplacé lors de l'actionnement du levier (200), des moyens (130, 140, 123) de guidage du levier (200) et une palette (520) en prise avec le levier (200), montée à pivotement par rapport au coulisseau (510) de sorte qu'un doigt (524) lié à la palette (520) soit placé respectivement de part et d'autre d'une butée (123) liée au boîtier (100) lorsque le levier (200) est déplacé dans un plan, pour imposer un trajet en U du coulisseau (510) et du levier (200) et interdire un déplacement selon un trajet en forme de rectangle fermé pour ce dernier.

9. Ensemble selon la revendication 8, caractérisé par le fait que le levier (200) est guidé à déplacement selon deux plans orthogonaux entre eux, la palette (520) est déplacée entre deux positions dites zéro ou repos et neutre lors du pivotement du levier dans un plan et étant déplacée à partir de cette position de zéro ou repos et neutre dans deux positions de travail respectives lorsque le levier est déplacé dans un second plan perpendiculaire au premier, la butée (123) et le doigt (524) prévu sur la palette (520) interdisant un passage direct d'une position de travail à l'autre, mais imposant un retour préalable par la position de zéro ou repos et la position neutre.

10. Ensemble selon l'une des revendications 1 à 9, caractérisé par le fait que le boîtier (100) loge un bloc transducteur (400) commandé par le levier (200) et un bloc mécanique (500) qui assure le guidage et l'indexage du levier (200).

11. Ensemble selon l'une des revendications 1 à 10, caractérisé par le fait que le boîtier (100) comprend des moyens (123, 140) aptes à guider le levier (200) à déplacement selon un mouvement en "h".

12. Ensemble selon l'une des revendications 1 à 11, caractérisé par le fait que le boîtier (100) est formé par assemblage de deux coquilles identiques (110).

13. Ensemble selon l'une des revendications 1 à 12, caractérisé par le fait que le boîtier (100) définit une chambre interne (120) qui débouche sur l'extérieur par l'intermédiaire d'une cavité (130) conçue pour guider le levier (200) à pivotement.

14. Ensemble selon la revendication 13, caractérisé par le fait que la cavité (130) comprend une calotte sphérique centrale (132) apte à guider une rotule sphérique (210) prévue sur le levier (200), laquelle calotte sphérique (132) est encadrée par deux cavités secondaires symétriques (134) aptes à recevoir à débattement et à rotation autour de leurs axes, deux tourillons cylindriques (212, 214) diamétralement opposés sur la rotule du levier (200).

15. Ensemble selon l'une des revendications 1 à 14, caractérisé par le fait que le levier (200) comprend une rotule secondaire (230) adaptée pour coopérer avec un bloc mécanique (500) de guidage et d'indexage.

16. Ensemble selon l'une des revendications 1 à 15, caractérisé par le fait que le levier (200) comprend un tronçon (240) de section non symétrique de révolution adapté pour coopérer avec des butées (140, 123) prévues sur le boîtier pour imposer un trajet de déplacement au levier (200).

17. Ensemble selon l'une des revendications 1 à 16, caractérisé par le fait que le boîtier (100) loge un bloc transducteur (400) et un bloc mécanique (500) assurant l'indexage du levier (200), le bloc mécanique (500) étant placé entre une rotule (210) d'articulation à pivotement du levier (200) et le bloc transducteur (400).

18. Ensemble selon l'une des revendications 1 à 17, caractérisé par le fait que le bloc transducteur (400) loge des interrupteurs (300) commandés par le levier (200).

19. Ensemble selon l'une des revendications 1 à 17, caractérisé par le fait que le bloc transducteur (400) comprend un tiroir supportant des aimants en regard de sondes de Hall ou comprenant des fenêtres susceptibles d'être intercalées entre des paires d'aimants et sondes de Hall.

20. Ensemble selon l'une des revendications 1 à 17, caractérisé par le fait que les transducteurs sont formés de moyens opto-électroniques.

21. Ensemble selon l'une des revendications 1 à 20, caractérisé par le fait que le boîtier loge un bloc transducteur (400) comprenant une entretoise (430) qui sert de câle à un circuit imprimé (420) support de transducteur(s) et à une came de commande (410) actionnée par le levier (200).

22. Ensemble selon l'une des revendications 1 à 21, caractérisé par le fait que le bloc transducteur (400) comprend une grille (440) formée d'une plaque en métal munie de pattes (444) engagées dans une entretoise (430) pour câler un circuit imprimé (420) support de transducteur(s) (300) et une came de commande (410) de ceux-ci actionnée par le levier (200).

23. Ensemble selon l'une des revendications 1 à 22, caractérisé par le fait que le bloc transducteur (400) comprend un tiroir (410) pourvu de cames adaptées pour commander les transducteurs (300).

24. Ensemble selon la revendication 23, caractérisé par le fait que le tiroir (410) est adapté pour commander au moins deux transducteurs (300) à chaque déplacement du levier (200).

25. Ensemble selon l'une des revendications 1 à 24, caractérisé par le fait qu'il comprend un bloc mécanique (500) d'indexage et de guidage du levier (200) et qui comprend un coulisseau (510) adapté pour être guidé à translation lorsque le levier (200) est déplacé à pivotement dans un premier plan, et une palette (520) montée à pivotement sur le coulisseau (510) pour pivoter par rapport à celui-ci lorsque le levier (200) est déplacé dans un second plan orthogonal au premier.

26. Ensemble selon la revendication 25, caractérisé par le fait qu'un ressort assure le rappel de la palette pivotante (520) vers une position de repos.

27. Ensemble selon l'une des revendications 25 ou 26, caractérisé par le fait qu'il comprend des moyens (550) assurant un indexage du coulisseau (510) dans son déplacement à translation.

28. Ensemble selon l'une des revendications 25 à 27, caractérisé par le fait qu'il comprend une lumière (513) ménagée dans le coulisseau (510) pour recevoir un fût (522) solidaire de la palette, de sorte que la palette (520) soit liée au coulisseau (510) lorsque celui-ci est déplacé à translation.

29. Ensemble selon l'une des revendications 25 à 28, caractérisé par le fait qu'il comprend des moyens assurant le rappel du coulisseau (510) vers une position de repos.

30. Ensemble selon l'une des revendications 1 à 29, caractérisé par le fait qu'il comprend un tiroir ou coulisseau (410, 510) formé d'un plastique chargé de billes de bronze.

31. Ensemble selon l'une des revendications 25 à 29, caractérisé par le fait que la palette (520) comprend un fût (522) adapté pour recevoir une rotule complémentaire (230) formée sur le levier (200), lequel fût (522) possède une partie inférieure non cylindrique, mais convergente, pour limiter les déplacements à translation du coulisseau (510) et de la palette (520) selon l'axe longitudinal du levier (200).

32. Ensemble selon l'une des revendications 1 à 31 prise en combinaison avec la revendication 8, caractérisé par le fait qu'il est prévu des moyens (1230, 5240). respectivement sur la butée (123) liée au boîtier (100) et sur le doigt (524) lié à la palette (520) pour définir une position indexée stable de la palette (520) lorsque ces structures (1230, 5240) sont en prise.

## Patentansprüche

1. Steuerhebelanordnung, die insbesondere für ein automatisiertes mechanisches Schaltgetriebe bestimmt ist, enthaltend ein Gehäuse (100), einen an dem Gehäuse (100) schwenkbar montierten Schalthebel (200) und einen Steuerschieber (410), der mit einem längsförmigen Schlitz (412) versehen ist, in den ein unsymmetrisch rotierender Endabschnitt (206) des Schalthebels (200) eingepaßt ist,
**dadurch gekennzeichnet, daß**
sich dieser Endabschnitt (206) des Schalthebels (200), welcher in den längsförmigen Schlitz (412) des Steuerschiebers (410) eingepaßt wird, mit diesem Schlitz (412) so ergänzt, daß das Zusammenwirken zwischen dem Endabschnitt (206) des Schalthebels (200) und dem in dem Steuerschieber (410) ausgebildeten Schlitz (412) eine Verschiebung des Steuerschiebers (410) entlang zwei zueinander rechtwinklig liegenden Achsen bewirkt.

2. Steuerhebelanordnung nach Anspruch 1,
**dadurch gekennzeichnet, daß**
der in den längsförmigen Schlitz (412) des Steuerschiebers (410) eingesetzte Endabschnitt (206) des Schalthebels (200) zwei einander gegenüberliegende zylindrische Flächen (220, 222) und zwei ebenfalls einander gegenüberliegende kugelförmige Flächen (224, 226) aufweist, die zwischen die beiden zylindrischen Flächen (220, 222) eingeschoben sind.

3. Steuerhebelanordnung nach Anspruch 2,
**dadurch gekennzeichnet, daß**
die beiden zylindrischen Flächen (220, 222) und die beiden kugelförmigen Flächen (224, 226) in Paaren symmetrisch gegenüber Ebenen angeordnet sind, welche die Achse des Schalthebels (200) schneiden.

4. Steuerhebelanordnung nach Anspruch 3,
**dadurch gekennzeichnet, daß**
die beiden zylindrischen Flächen (220, 222) auf eine gemeinsame Achse (221) zentriert sind, welche rechtwinklig zu der Längsachse (202) des Schalthebels (200) liegt und ihn schneidet.

5. Steuerhebelanordnung nach einem der Ansprüche 3 oder 4,
**dadurch gekennzeichnet, daß**
die kugelförmigen Flächen (224, 226) auf die Längsachse (202) des Schalthebels (200) zentriert sind.

6. Steuerhebelanordnung nach einem der Ansprüche 2 bis 5,
**dadurch gekennzeichnet, daß**
die kugelförmigen Flächen (224, 226) einen Radius haben, welcher größer ist, als der Radius der zylindrischen Flächen (220, 222).

7. Steuerhebelanordnung nach einem der Ansprüche 1 bis 6,
**dadurch gekennzeichnet, daß**
der Steuerschieber (410) Meßwandler (300) führt.

8. Steuerhebelanordnung nach einem der Ansprüche 1 bis 7,
**dadurch gekennzeichnet, daß**
sie außerdem einen Gleitstein (510) aufweist, der mit dem Schalthebel (200) so im Eingriff steht, daß er durch Betätigung des Schalthebels (200) verschoben werden kann, sowie Mittel (130, 140, 123) für die Führung des Schalthebels (200) und eine mit dem Schalthebel (200) im Eingriff stehende Palette (520), die gegenüber dem Gleitstein (510) so schwenkbar gelagert ist, daß ein mit der Palette (520) verbundener Finger (524) jeweils auf beiden Seiten eines an dem Gehäuse (100) montierten Widerlagers (123) angeordnet wird, wenn der Schalthebel (200) in einer Ebene verschoben wird, um dadurch eine U-förmige Bewegungsbahn des Gleitsteins (510) und des Schalthebels (200) zu bewirken und eine rechteckige Bewegungsbahn zu verhindern, welche für ihn verschlossen ist.

9. Steuerhebelanordnung nach Anspruch 8,
**dadurch gekennzeichnet, daß**
die Verschiebung des Schalthebels (200) in zwei zueinander rechtwinkligen Ebenen geführt wird und die Palette (520) zwischen zwei Positionen verschoben wird, die als Null- bzw. Ruheposition und neutrale Position bezeichnet werden, wenn der Schalthebel in einer Ebene bewegt wird, und diese Palette aus dieser Null- bzw. Ruheposition und neutralen Position in zwei Betriebsstellungen bewegt wird, wenn der Schalthebel in eine zweite rechtwinklig zu der ersten Ebene liegenden Position bewegt wird, und daß das Widerlager (123) und der auf der Palette (520) angeordnete Finger (524) den direkten Übergang von einer Betriebsstellung in eine andere Betriebsstellung verhindern, jedoch eine vorherige Rückkehr durch die Null- bzw. Ruheposition und die neutrale Position bewirken.

10. Steuerhebelanordnung nach einem der Ansprüche 1 bis 9,
**dadurch gekennzeichnet, daß**
in dem Gehäuse (100) ein durch den Schalthebel (200) betätigter Meßwandlerblock (400) vorgesehen ist, sowie ein mechanischer Block (500), welcher die Führung und die Indexierung des Schalthebels (200) gewährleistet.

11. Steuerhebelanordnung nach einem der Ansprüche 1 bis 10,
**dadurch gekennzeichnet, daß**
das Gehäuse (100) Mittel (123, 140) enthält, mit deren Hilfe der Schalthebel (200) in einer "H"-förmigen Bewegungsbahn geführt werden kann.

12. Steuerhebelanordnung nach einem der Ansprüche 1 bis 11,
**dadurch geknnzeichnet, daß**
das Gehäuse (100) aus zwei identischen Schalen (110) besteht.

13. Steuerhebelanordnung nach einem der Ansprüche 1 bis 12,
**dadurch gekennzeichnet, daß**
das Gehäuse (100) eine innere Kammer (120) bildet, die über einen Hohlraum (130) für die Steuerung der Schwenkbewegung des Schalthebels (200) an der Außenseite mündet.

14. Steuerhebelanordnung nach Anspruch 13,
**dadurch gekennzeichnet, daß**
der Hohlraum (130) eine zentrale kugelförmige Kalotte (132) aufweist, die geeignet ist, ein auf dem Schalthebel (200) vorgesehenes Kugelgelenk (210) zu führen, wobei diese kugelförmige Kalotte (132) von zwei symmetrischen sekundären Hohlräumen (134) eingerahmt wird, die so ausgelegt sind, daß sie zwei um ihre Achse ausfedernde und drehende zylindrische Kippzapfen (212, 214) aufnehmen können, welche einander diametral gegenüberliegend auf dem Kugelgelenk des Schalthebels (200) angeordnet sind.

15. Steuerhebelanordnung nach einem der Ansprüche 1 bis 14,
**dadurch gekennzeichnet, daß**
der Schalthebel (200) ein sekundäres Kugelgelenk (230) aufweist, welches mit einem mechanischen Block (500) für die Führung und Indexierung kooperiert.

16. Steuerhebelanordnung nach einem der Ansprüche 1 bis 15,
**dadurch gekennzeichnet, daß**
der Schalthebel (200) ein Endstück (240) mit einem unsymmetrischen Rotationsquerschnitt aufweist, der mit auf dem Gehäuse montierten Widerlagern (140, 123) zusammenarbeitet, um eine Bewegungsbahn des Schalthebels (200) vorzugeben.

17. Steuerhebelanordnung nach einem der Ansprüche 1 bis 16,
**dadurch gekennzeichnet, daß**
in das Gehäuse (100) ein Meßwandlerblock (400) und ein mechanischer Block (500) für die Indexierung des Schalthebels (200) eingepaßt sind, wobei der mechanische Block (500) zwischen einem Kugelgelenk (210) für die Schwenkung des Schalthebels (200) und dem Meßwandlerblock (400) angeordnet ist.

18. Steuerhebelanordnung nach einem der Ansprüche 1 bis 17,
**dadurch gekennzeichnet, daß**
in dem Meßwandlerblock (400) Unterbrecher (300) vorgesehen sind, welche von dem Schalthebel (200) betätigt werden.

19. Steuerhebelanordnung nach einem der Ansprüche 1 bis 17,
**dadurch gekennzeichnet, daß**
der Meßwandlerblock (400) einen Steuerschieber enthält, in dem Magnete gegenüber Hallsonden angeordnet sind, oder Fenster aufweist, die zwischen Paaren von Magneten und Hallsonden eingeschoben werden können.

20. Steuerhebelanordnung nach einem der Ansprüche 1 bis 17,
**dadurch gekennzeichnet, daß**
die Meßwandler aus opto-elektronischen Mitteln bestehen.

21. Steuerhebelanordnung nach einem der Ansprüche 1 bis 20,
**dadurch gekennzeichnet, daß**
in dem Gehäuse ein Meßwandlerblock (400) enthalten ist, welcher ein Abstandsstück (430) aufweist, das als Unterlage für eine gedruckte Schaltung (420), welche den/die Meßwandler und für eine Betätigungsnocke (410) dient, welche durch den Schalthebel (200) aktiviert wird.

22. Steuerhebelanordnung nach einem der Ansprüche 1 bis 21,
**dadurch gekennzeichnet, daß**
der Meßwandlerblock (400) ein Steuerraster (440) enthält, das aus einer Metallplatte besteht, an der Haken (444) befestigt sind, die in ein Abstandsstück (430) eingreifen, um eine gedruckte Schaltung (420) zu befestigen, welche den/die Meßwandler (300) und deren Betätigungsnocke (410) trägt, die von dem Schalthebel (200) aktiviert wird.

23. Steuerhebelanordnung nach einem der Ansprüche 1 bis 22,
**dadurch gekennzeichnet, daß**
der Meßwandlerblock (400) einen mit Nocken ausgestatteten Steuerschieber (410) aufweist, um die Meßwandler (300) zu betätigen.

24. Steuerhebelanordnung nach Anspruch 23,
**dadurch gekennzeichnet, daß**
der Steuerschieber (410) bei jeder Verschiebung des Schalthebels (200) mindestens zwei Meßwandler (300) betätigen kann.

25. Steuerhebelanordnung nach einem der Ansprüche 1 bis 24,
**dadurch gekennzeichnet, daß**
sie einen mechanischen Block (500) für die Indexierung und Führung des Schalthebels (200) aufweist, welcher einen Gleitstein (510) enthält, der parallel verschiebbar geführt werden kann, wenn der Schalthebel (200) in eine erste Ebene bewegt wird, sowie eine Palette (520), welche schwenkbar auf dem Gleitstein (510) montiert ist, um gegenüber diesem verschwenkt zu werden, wenn der Schalthebel (200) in eine zweiten Ebene verschoben wird, die rechtwinklig zu der ersten Ebene liegt.

26. Steuerhebelanordnung nach Anspruch 25,
**dadurch gekennzeichnet, daß**
eine Feder den Rückzug der schwenkbaren Palette (520) in die Ruheposition gewährleistet.

27. Steuerhebelanordnung nach einem der Ansprüche 25 oder 26,
**dadurch gekennzeichnet, daß**
sie Mittel (550) für die Indexierung des Gleitsteins (510) während seiner parallelen Verschiebung aufweist.

28. Steuerhebelanordnung nach einem der Ansprüche 25 bis 27,
**dadurch gekennzeichnet, daß**
sie einen Schlitz (513) aufweist, der in den Gleitstein (510) eingebracht ist, um einen mit der Palette fest verbundenen Schaft (522) so aufzunehmen, daß die Palette (520) mit dem Gleitstein (510) verbunden ist, wenn dieser parallel verschoben wird.

29. Steuerhebelanordnung nach einem der Ansprüche 25 bis 28,
**dadurch gekennzeichnet, daß**
sie Mittel aufweist, welche den Rückzug des Gleitsteins (510) in die Ruheposition gewährleisten.

30. Steuerhebelanordnung nach einem der Ansprüche 1 bis 29,
**dadurch gekennzeichnet, daß**
sie einen Steuerschieber oder einen Gleitstein (410, 510) aufweist, welcher aus einem mit Bronzekugeln befüllten Kunststoff hergestellt ist.

31. Steuerhebelanordnung nach einem der Ansprüche 25 bis 29,
**dadurch gekennzeichnet, daß**
die Palette (520) einen Schaft (522) enthält, in den ein auf dem Schalthebel (200) vorgesehenes zusätzliches Kugelgelenk (230) eingepaßt werden kann, wobei dieser Schaft (522) einen nicht zylindrischen aber konvergierenden unteren Teil aufweist, um die parallel verschiebbaren Bewegungen des Gleitsteins (510) und der Palette (520) in der Längsachse des Schalthebels (200) zu begrenzen.

32. Steuerhebelanordnung nach einem der Ansprüche 1 bis 31, gesehen in Kombination mit Anspruch 8,
**dadurch gekennzeichnet, daß**
jeweils auf dem mit dem Gehäuse (100) verbundenen Widerlager (123) und auf dem mit der Palette (520) verbundenen Finger (524) Mittel (1230, 5240) vorgesehen sind, um eine indizierte stabile Position der Palette (520) zu definieren, wenn diese Strukturen (1230, 5240) miteinander im Eingriff stehen.

## Claims

1. A control lever assembly, in particular for a robotized manual gearbox, the assembly comprising a housing (100), a lever (200) pivotally mounted on the housing (100), and a control slide (410) provided with a generally oblong slot (412) which receives a non-circularly-symmetrical end (206) of the lever (200), such that co-operation between the end (206) of the lever (200) and the slot (412) formed in the control slide (410) causes the control slide (410) to be displaced along two mutually orthogonal axes.

2. An assembly according to claim 1, characterized by the fact that the above-specified end (206) of the lever (200) engaged in the oblong slot (412) of the control slide (410) has two opposite cylindrical faces (220, 222) and two likewise mutually opposite spherical faces (224, 226) interposed between the cylindrical faces (220, 222).

3. An assembly according to claim 2, characterized by the fact that the two cylindrical faces (220, 222) and the two spherical faces (224, 226) are symmetrical in pairs about planes intersecting the axis of the lever (200).

4. An assembly according to claim 3, characterized by the fact that the two cylindrical faces (220, 222) are centered on a common axis (221) perpendicular to the longitudinal axis (202) of the lever (200) and intersecting it.

5. An assembly according to claim 3 or 4, characterized by the fact that the spherical surfaces (224, 226) are centered on the longitudinal axis (202) of the lever (200).

6. An assembly according to any one of claims 2 to 5, characterized by the fact that the spherical faces (224, 226) are of radius greater than that of the cylindrical faces (220, 222).

7. An assembly according to any one of claims 1 to 6, characterized by the fact that the control slide (410) controls transducers (300).

8. An assembly according to any one of claims 1 to 7, characterized by the fact that it further comprises a slider (510) engaged with the lever (200) to be displaced when the lever (200) is actuated, guide means (130, 140, 123) for guiding the lever (200), and a plate (520) engaged with the lever (200), mounted to pivot relative to the slider (510) so that a finger (524) associated with the plate (520) is placed on respective sides of an abutment (123) associated with the housing (100) when the lever (200) is displaced in a plane, so as to constrain the lever (200) to follow a U-shaped path of the slider (510) and prevent displacement of the lever along a path in the form of a closed rectangle.

9. An assembly according to claim 8, characterized by the fact that the lever (200) is guided in displacement along two mutually orthogonal planes, the plate (520) is displaced between two positions, a "zero" or "rest" position and a "neutral" position when the lever is pivoted in a first plane, and is displaced from said zero or rest position or said neutral position into two respective working positions when the lever is displaced in a second plane perpendicular to the first, the abutment (123) and the finger (524) provided on the plate (520) preventing direct passage from one working position to the other, and requiring prior return via the zero or rest position and the neutral position.

10. An assembly according to any one of claims 1 to 9, characterized by the fact that the housing (100) houses a transducer block (400) controlled by the lever (200), and a mechanical block (500) which guides and indexes the lever (200).

11. An assembly according to any one of claims 1 to 10, characterized by the fact that the housing (100) has means (123, 140) suitable for guiding the lever (200) in displacement in an h-shaped pattern.

12. An assembly according to any one of claims 1 to 11, characterized by the fact that the housing (100) is formed by assembling together two identical shells (110).

13. An assembly according to any one of claims 1 to 12, characterized by the fact that the housing (100) defines an internal chamber (120) which opens to the outside via a cavity (130) designed to guide the lever (200) in pivoting.

14. An assembly according to claim 13, characterized by the fact that the cavity (130) includes a central spherical cap (132) suitable for guiding a spherical ball (210) provided on the lever (200), which spherical cap (132) is located between two symmetrical secondary cavities (134) suitable for receiving with clearance two diametrically opposite cylindrical stub axles (212, 214) on the ball of the lever (200) and for allowing them to rotate about their axes.

15. An assembly according to any one of claims 1 to 14, characterized by the fact that the lever (200) has a secondary ball (230) adapted to co-operate with a block (500) for mechanical guidance and indexing.

16. An assembly according to any one of claims 1 to 15, characterized by the fact that the lever (200) has a segment (240) of non-circularly-symmetrical section adapted to co-operate with abutments (140, 123) provided on the housing to impose a displacement path on the lever (200).

17. An assembly according to any one of claims 1 to 16, characterized by the fact that the housing (100) houses a transducer block (400) and a mechanical block (500) for indexing the lever (200), the mechanical block (500) being placed between the transducer block (400) and a pivoting hinge ball (210) of the lever (200).

18. An assembly according to any one of claims 1 to 17, characterized by the fact that the transducer block (400) houses switches (300) controlled by the lever (200).

19. An assembly according to any one of claims 1 to 17, characterized by the fact that the transducer block (400) comprises a slide supporting magnets facing Hall-effect sensors or including windows suitable for being interposed between pairs of magnets and Hall-effect sensors.

20. An assembly according to any one of claims 1 to 17, characterized by the fact that the transducers are formed by optoelectronic means.

21. An assembly according to any one of claims 1 to 20, characterized by the fact that the housing houses a transducer block (400) comprising a spacer (430) which serves as a wedge to a printed circuit (420) supporting one or more transducers and to a control cam (410) actuated by the lever (200).

22. An assembly according to any one of claims 1 to 21, characterized by the fact that the transducer block (400) has a gate (440) formed by a sheet of metal provided with tabs (444) engaged in a spacer (430) to wedge a printed circuit (420) supporting one or more transducers (300) and a control cam (410) thereof actuated by the lever (200).

23. An assembly according to any one of claims 1 to 22, characterized by the fact that the transducer block (400) has a slide (410) provided with cams adapted to control the transducers (300).

24. An assembly according to claim 23, characterized by the fact that the slide (410) is adapted to control at least two transducers (300) on each displacement of the lever (200).

25. An assembly according to any of claims 1 to 24, characterized by the fact that it has a mechanical indexing and guide block (500) for the lever (200) and which has a slide (510) adapted to be guided in translation when the lever (200) is pivoted in a first plane, and a plate (520) pivotally mounted on the slider (510) to pivot relative thereto when the lever (200) is displaced in a second plane orthogonal to the first.

26. An assembly according to claim 25, characterized by the fact that a spring serves to return the pivoting plate (520) to a rest position.

27. An assembly according to claim 25 or 26, characterized by the fact that it has means (550) for indexing the slider (510) in its translation displacement.

28. An assembly according to any one of claims 25 to 27, characterized by the fact that it has a slot (513) formed in the slider (510) to receive a drum (522) secured to the plate, so that the plate (520) is linked to the slider (510) when it is displaced in translation.

29. An assembly according to any one of claims 25 to 28, characterized by the fact that it has means for returning the slider (510) towards a rest position.

30. An assembly according to any one of claims 1 to 29, characterized by the fact that it has a slide or slider (410, 510) made of a plastic that is filled with bronze beads.

31. An assembly according to any one of claims 25 to 29, characterized by the fact that the plate (520) has a drum (522) adapted to receive a complementary ball (230) formed on the lever (200), which drum (522) has a converging non-cylindrical bottom portion to limit translation displacements of the slider (510) and of the plate (520) along the longitudinal axis of the lever (200).

32. An assembly according to any one of claims 1 to 31 taken in combination with claim 8, characterized by the fact that means (1230, 5240) are provided respectively on the abutment (123) associated with the housing (100) and on the finger (524) associated with the plate (520) to define a stable indexed position for the plate (520) when said structures (1230, 5240) are mutually engaged.
